# EUROPEAN PATENT SPECIFICATION

(11) **EP 2 567 878 B1**
(45) Date of publication and mention of the grant of the patent: **04.11.2015**
(21) Application number: 11180798.8
(22) Date of filing: 09.09.2011
(51) Int. Cl.: B62D 1/183, B62D 1/185

(54) **A steering column arrangement**
Lenksäulenanordnung
Agencement d'une colonne de direction

(43) Date of publication of application: 13.03.2013
(73) Proprietor: Autoliv Development AB, 447 83 Vårgårda (SE)
(72) Inventor: Hallenbert, Lennart, 447 93 Vargarda (SE); Rydsmo, Erik, 466 95 Sollebrunn (SE)
(74) Representative: Beattie, Alex Thomas Stewart

(56) References cited:
- EP-A1- 0 518 002
- DE-A1- 3 409 986
- US-A- 4 993 279

## Description

THIS INVENTION relates to a steering column arrangement, and in particular a steering column arrangement that allows the angle of tilt of the steering wheel to be adjusted easily to allow an individual to enter a driver's seat easily.

Many vehicles allow the angle of tilt of the steering wheel with respect to the steering column to be adjusted. This allows the angle and position of the steering wheel to be adjusted to be comfortable for drivers of different heights and sizes, and also to accommodate different preferences for the seating position of the driver.

Some of these mechanisms also allow an "easy-entry" facility, which allows the steering wheel to be tilted up to a relatively steep angle, to allow a driver to enter or leave the vehicle easily. This may be necessary if the space between the driver seat and the steering wheel is relatively small (which may be the case, for example, in industrial/agricultural vehicles or in sports cars), or if the driver of the vehicle is disabled, overweight or otherwise large.

DE3409986 discloses as closest prior art a steering column for motor vehicles consisting of an upper and a fixed lower component, the upper component being adjustable in inclination with respect to the lower one and the two components being connected to one another by means of a joint which can be moved about a transverse axis. Locking elements serve to lock the two components of the steering column in a set position of inclination of the upper component, which can be swivelled out of this set position into a position of rest. When swivelling back, the upper component returns automatically into the previously set inclination position.

It is an object of the present invention to provide an improved system of this type. Accordingly, one aspect of the present invention provides a steering column adjustment arrangement comprising: a housing; an adjustment element to which a steering wheel column may be connected so that the steering wheel column pivots with the adjustment element; and a retaining member, attached to the adjustment element; and a moveable support element included in a shoulder and attached to a side plate which may move with respect to said plate to a first position, in which the moveable support element presents a first support surface, wherein the adjustment element may be placed in a first easy-entry position, in which the steering column socket assembly is rotated away from the normal driving position, in which the retaining member engages the first support surface, to hold the adjustment element in the first easy-entry position; and the adjustment element may be placed in a second easy-entry position, in which the steering column socket assembly is rotated away from the normal driving position, in which the retaining member engages the first support surface in a different position, or a further support surface, to hold the steering wheel column socket assembly in the second easy-entry position.

Advantageously, the steering wheel column socket assembly is rotated away from the normal driving position by a lesser amount in the second easy-entry position than in the first easy-entry position.

Preferably, when the movable support element is in the first position, the movable support element obstructs the further support surface.

Conveniently, the moveable support may move to a second position to allow the retaining member to engage the further support surface.

Advantageously, the moveable support element is moveable in a direction which is substantially perpendicular to the further support surface.

Preferably, the first support surface and further support surface are generally parallel to, and spaced apart from, one another.

Conveniently, the moveable member may move with respect to the housing between the first position, in which the first support surface is in position to hold the adjustment element in the first easy entry position, and a second position, in which the first support surface is in position to hold the retaining member in the second easy-entry position.

Advantageously, the moveable member is rotatable with respect to the housing.

Preferably, the rotation of the moveable member with respect to the housing is altered by varying the effective length of the steering column.

Conveniently, a cam slot and cam follower are provided to control the rotation of the moveable member with respect to the housing.

Another aspect of the present invention provides a vehicle incorporating a steering column adjustment arrangement according to any of the above.

In order that the present invention may be more readily understood, embodiments of the invention will now be described, by way of example, with reference to the accompanying drawings, in which:
Figures 1, 2a and 2b show a first arrangement embodying the present invention;
Figures 3, 4 and 5a to 5c show the first arrangement in use;
Figure 6 shows a second arrangement embodying the present invention;
Figure 7 shows a third arrangement embodying the present invention;
Figures 8 to 11 show stages in the use of a fourth arrangement embodying the present invention.

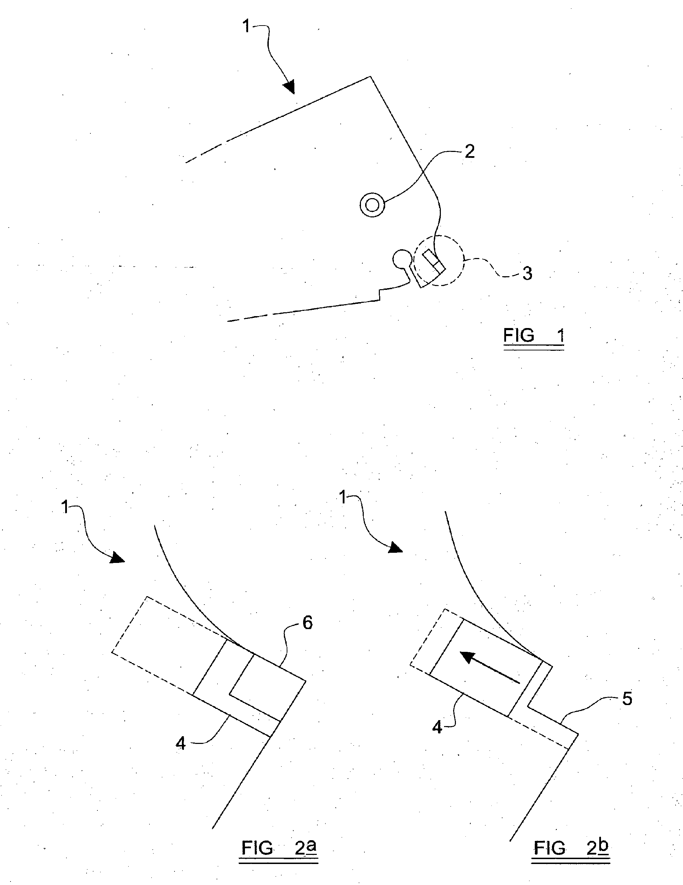

Figure 1 shows a schematic view of a side plate for a steering column assembly. As will be understood by those skilled in the art, a pair of side plates 1 may be provided in parallel spaced relation, with a steering column socket assembly rotatably mounted between the side plates 1. A pivot point 2 is formed through the side plates 1, and the socket assembly pivots with respect to the side plates around an axis passing through the pivot point 2.

A shoulder 3 is provided as part of the profile shape of the side plate 1. The shoulder 3 is shown in more detail in figures 2a and 2b.

The shoulder 3 includes a moveable support element 4, which is attached to the side plate 1 and may slide with respect thereto. In preferred embodiments an inner surface of the side plate 1 is provided with a pair of raised ribs (not shown), with the support element 4 being slideably attached to the inner surface by way of the ribs, for instance through co-operating keyways.

The profile of the side plate 1, as can most clearly be seen in Figure 2b, includes a cut-out section, which presents a first shoulder surface 5, formed from a part of the side plate 1 itself.

The support element 4 can be moved to a first position, shown in figure 2a, in which the support element 4 effectively filled the cut-out in the profile of the side plate 1, and presents a second shoulder surface 6 on which an object may rest. The second shoulder surface 6 is preferably substantially parallel with, and spaced apart from, the first shoulder surface 5. The support element 4 may also slide inwardly to a second, retracted position, as shown in figure 2b, in which the support element 4 is effectively hidden within the profile of the side plate 1 (as seen side on), and does not obstruct the first shoulder surface 5.

In preferred embodiments the support element 4 is resiliently biased into the first position, so that the support element 4 may be pushed relatively easily from the first position into the second position, but will automatically return to the first position when the pushing force is withdrawn.

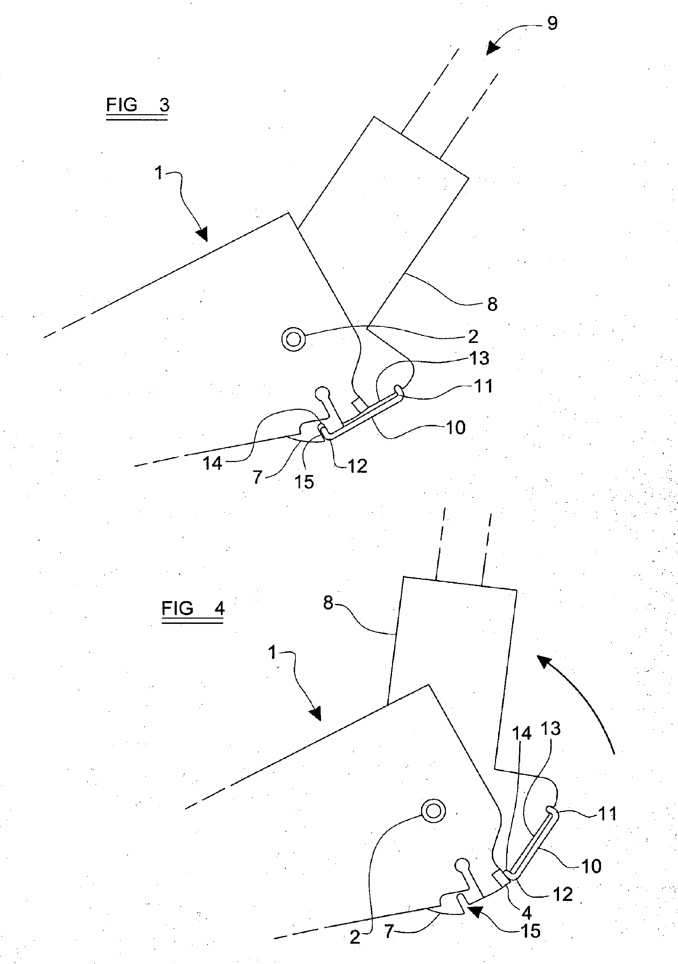

Figure 3 shows the side plates 1 in conjunction with other components. An adjustment plate 7 is received within the side plate 1, and pivots around the pivot point 2. The adjustment plate 7 may be rotatable with respect to the side plates 1, through a limited degree of rotation, when a user operates a rotation adjustment control (not shown).

A steering wheel column socket assembly 8 is also attached to the side plates 1, and rotatable with respect thereto around the pivot point 2. The steering wheel of the vehicle (not shown) is attached to a distal end 9 of the socket assembly 8.

The socket assembly 8 includes a catch member 10. At a first end 11 the catch member 10 is pivotally attached to the socket assembly 8. The catch member 10 has a second, free end 12. In preferred embodiments the catch member 10 is biased into a first position (shown in figure 3) in which the catch member 10 lies along an edge 13 of the socket assembly 8. The catch member 10 may be pivoted about its first end 11 so that the second end 12 of the catch member 10 is lifted away from the edge 13, and is preferably biased so that the catch member 10 will return to its first, default position.

Preferably the free end 12 of the catch member 10 includes a protrusion 14 which extends away from the main body of the catch member 10. In the embodiment shown in the figures, the free end 12 of the catch member 10 is generally L-shaped, and the protrusion 14 projects generally at right angles with respect to the main body of the catch member 10. It will be understood, however, that many other types of protrusions may be used with the present invention (or indeed that no protrusion may be formed as the catch member 10).

In the embodiment shown in the figures, the adjustment plate 7 includes an indent 15 into which the protrusion 14 of the free end 12 of the catch member 10 fits. The biasing of the catch member 10 means that the protrusion 14 is biased into the indent 15, helping to ensure that the protrusion 14 remains within the indent 15. It will be understood that, in the configuration shown in figure 3, when the adjustment plate 7 is rotated with respect to the side plate 1, the socket assembly 8 will also rotate with respect to the side plate 1, as the adjustment plate 7 and socket assembly 8 are rotationally connected to one another by way of the catch member 10. The adjustment plate 7 may therefore be rotated to alter the angle of the steering wheel with respect to the vehicle's dashboard.

When a user wishes to make use of the "easy-entry" facility discussed above, the user may lift the catch member 10, so that it pivots about its first end 11, and the protrusion 14 of its second end 12 is lifted out of the indent 15. The socket assembly 8 is, therefore, no longer rotationally coupled to the adjustment plate 7, and the socket assembly 8 may be rotated upwardly into the position shown in figure 4, so that the steering wheel column is rotated upwardly, thus allowing a user to gain access easily to the driving seat of the vehicle.

Once the socket assembly 8 has been rotated upwardly, the catch member 10 may be released, and will rotate about its first end 11 towards its first, default position. If the socket assembly 8 has been rotated by a sufficient amount, the second end 12 of the catch member 10 will be able to rotate inwardly past the second surface 6 of the support member 4 (which will, by default, be in its first position). When the user then releases the socket assembly 8, which would tend to rotate downwardly under the influence of gravity, the second end 12 of the catch member 10 will rest against the second surface 6 provided by the support member 4, and the socket assembly 8 will therefore remain in its elevated position, as shown in figure 4.

There may be some circumstances, however, in which the socket assembly 8 is prevented from rotating all the way into the position shown in figure 4. For instance, the steering wheel may make contact with an object inside the vehicle's cabin, for instance the dashboard, before this position is reached. This may occur if the length adjustment (i.e. the distance between the pivot point 2 and the steering wheel) has been adjusted by the user to be at a very long or very short setting, if the user has installed an object such as a mobile phone or SatNav cradle on the dashboard, of if the user has installed a large steering wheel. In circumstances such as these, the second end 12 of the catch member 10 may fail to reach the position shown in figure 4 and, when the user releases the steering wheel, the socket assembly 8 may simply rotate downwardly under the force of gravity. The result is that the steering wheel may not remain in the easy-entry position shown in figure 4.

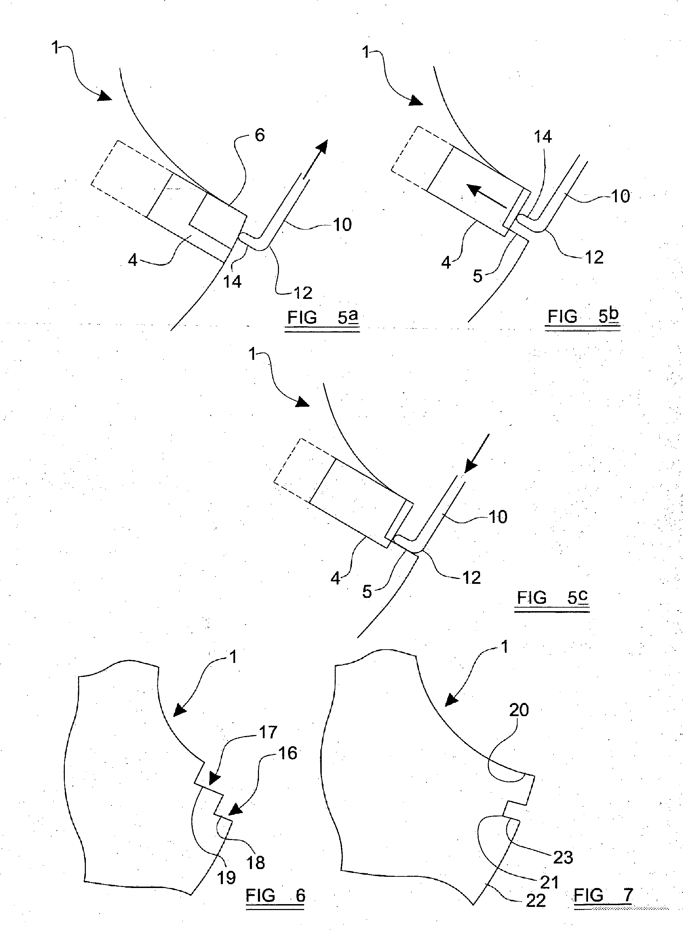

The embodiments of the present invention address this difficulty. Figures 5a to 5c show the sequence of events when the socket assembly 8 cannot complete the full range of rotation.

As shown in figure 5a, if the socket assembly 8 is able to rotate so that the protrusion 14 of the second end 12 of the catch member 10 is opposite the support member 4 then, when the catch member 10 is released, the catch member 10 will pivot so that the protrusion 14 pushes the support member 4 inwardly, towards its second position, as shown in figure 5b. When the user releases the socket assembly 8, the socket assembly 8 will rotate under the influence of gravity until it comes to rest against the first shoulder surface 5 of the side plate 1.

Therefore, if the socket assembly 8 can describe its fully intended range of rotation without encountering an obstruction, the second end 12 of the catch member 10 may rest on the second shoulder surface 6 provided by the support member 4. If the socket assembly 8 can only rotate by a reduced amount, the second end 12 of the catch member 10 may push the support member 4 aside and rest on the first shoulder surface 5 provided by the support plate 1. In either case, the user may lean or rest on the steering wheel as he or she enters the vehicle cabin, and the steering wheel will provide support for this.

It will be understood that, starting from the position shown in figure 5c, if the user lifts the catch member 10 once again to return the steering wheel from the easy-entry position to its normal position, the second end 12 of the catch member 10 will be pulled away from the first shoulder surface 5, the support member 4 will return to its first, default position, and the socket assembly 8 will rotate downwardly (clockwise, as shown in the figures) until the protrusion 14 of the second end 12 once again enters the detent 15 of the adjustment plate 7.

Figures 6 and 7 show alternative arrangements which achieve similar results, but which do not involve a moving support member.

Figure 6 shows a side plate 1 having a similar profile to that shown in figures 1 to 5c, to determine two sequential cut-out portions 16, 17, resembling adjacent steps on a staircase. Each cut-out portion 16, 17 has a respective support surface 18, 19 on which the second end 12 of the catch member 10 may rest. If the catch member 10 is able to perform a full intended range of motion, the catch member 10 may rotate by a first amount towards its first, default position and the second end 12 thereof may rest on the second support surface 19 formed by the second cut-out portion 17. Alternatively if the socket assembly cannot perform its full range of motion, the catch member may rotate by a lesser amount towards its first position, and the second end 12 of the catch member 10 may rest on the first support surface 18, formed as part of the first cut-out portion 16. In either case, the catch member 10 may rest firmly on one of the support surfaces 18, 19, thus allowing the user to rest or lean on the steering wheel as he or she enters the vehicle cabin.

Referring to figure 7, an alternative side plate 1 is shown that does not have a cut-out portion as shown in the preceding figures, and presents a main support surface 20 on which the second end 12 of the catch member 10 may rest if it is able to perform its full range of motion.

The side plate 1 does, however, have a notch or indent 21 formed in its side surface 22, and the notch or indent 21 includes a secondary support surface 23 which is generally parallel with, but spaced apart from, the main support surface 20. It will be appreciated that, if the socket assembly 8 is not able to perform its full range of motion, the protrusion 14 of the second end 12 of the catch member 10 may enter the notch or indent 21, and rest on the secondary support surface 23.

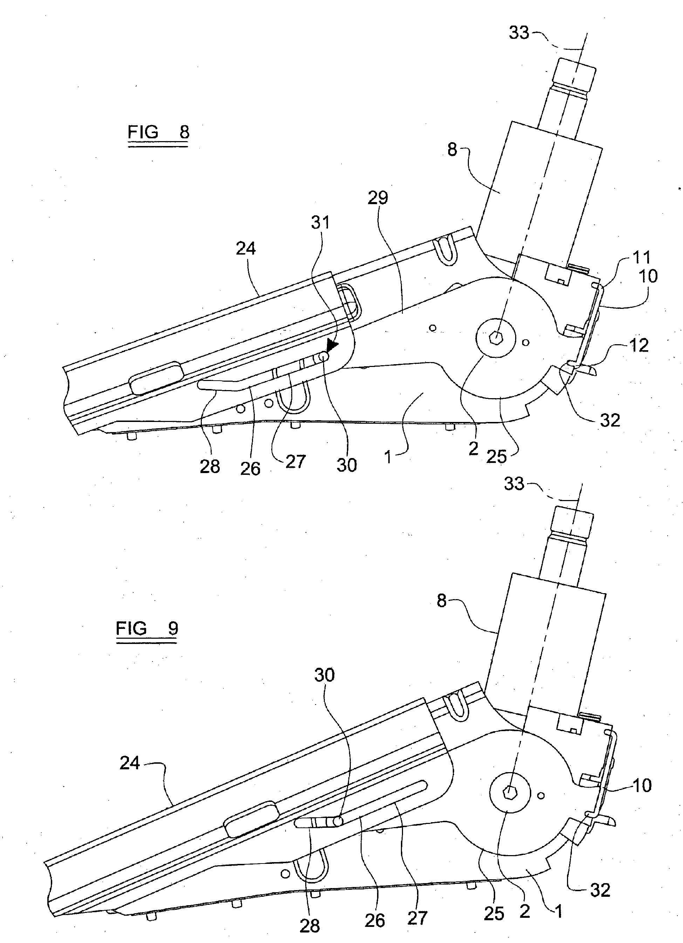

Figures 8 to 11 show a further embodiment of the invention.

Referring firstly to figure 8, a system is shown in which the effective length of the steering column may be adjusted. Side plates 1, similar to those described above, are provided, and again rotatably support a steering wheel column socket assembly 8 to which the steering wheel is attached.

The side plates 1 may slide with respect to a main support element 24, which may be rotatably fixed to the vehicle's chassis. By sliding the side plates 1 inwardly and outwardly with respect to the main support element 24, the effective length of the steering column may be increased or decreased, in accordance with the preference of the driver.

In the embodiments shown in figures 8 to 11, a rotatable cam plate 25 is provided, which lies parallel with the side plate 1 and is rotatable with respect to the side plate 1, preferably around the same pivot point 2 about which the socket assembly 8 rotates.

The main support element 24 has a cam slot 26 formed therein, and in preferred embodiments the cam slot 26 has an elongate first portion 27 and a further elongate second portion 28, which are arranged at an angle with respect to one another so as to form a continuous slot.

The cam plate 25 has a protrusion 29 which has, at or near its distal end, a cam pin 30 which is received in, and may travel along, the cam slot 26. In the position shown in Figure 8, the side plates 1 are extended with respect to the main support element 24 to their maximum extent, so that the effective length of the steering column is at its maximum. In this position, the cam pin 30 rests at a first end 31 of the cam slot 26, and in this position the cam pin 30 is at one end of the first section 27 of the cam slot 26.

The cam plate 25 has an indent 32 formed therein, which is shaped to receive the protrusion 14 of the second end 12 of the catch member 10. In the orientation of the cam plate 25 shown in Figure 8, the indent 32 is positioned so that, when the socket assembly 8 is moved into the easy-entry position, and the socket assembly 8 is able to perform its full intended range of motion, the protrusion 14 of the catch element 10 will align with the indent 32, so that the socket assembly 8 is supported in the easy-entry position by the cam plate 25. In the position shown in figure 8, the steering wheel column is aligned with an ideal easy-entry axis 33.

In these embodiments, it will therefore be understood that the catch element 10 is supported by the cam plate 25 when the socket assembly 8 is in the easy-entry position, and not by the main side plates 1.

Figure 9 shows the situation once the side plates 1 are slid with respect to the main support element 24, to shorten the effective length of the steering column. As this occurs, the cam pin 30 slides along the first section 27 of the cam slot 26. The first section 27 is generally parallel with the direction in which the side plates 1 are slid to adjust the length of the steering column, and therefore the orientation of the cam plate 25 with respect to the side plates 1 does not change substantially during this part of the movement. Figure 9 shows the situation where the cam pin 30 has travelled along the length of the first section 27 of the cam slot 26, and is at the junction between the first and second sections 27, 28 of the cam slot 26.

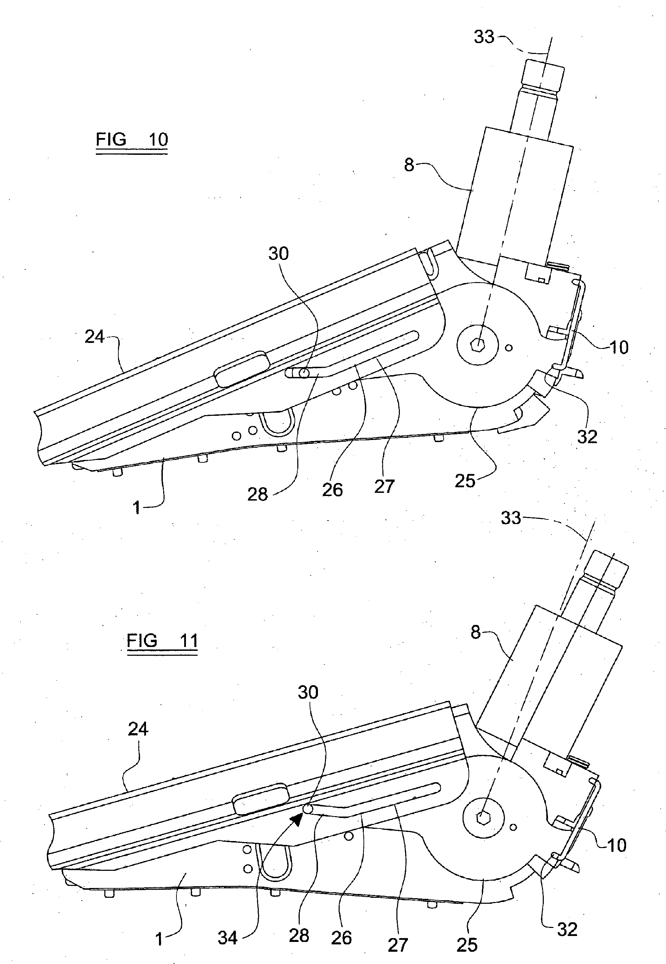

Figure 10 shows the situation where the side plates 1 have been slid further inwardly with respect to the main support element 24, to shorten the effective length of the steering column still further. The cam pin 30 begins to slide along the second section 28 of the cam slot 26. The second section 28 is tilted with respect to the first section 27, and is not parallel with the direction in which the side plates 1 slide with respect to the main support portion 24 to adjust the effect of length of the steering column. As the cam pin 30 travels along the second section 28 of the cam slot 26, therefore, the cam plate 25 rotates with respect to the side plates 1. During the motion of the cam pin 30 along the second section 28, the cam plate 25 rotates so that the indent 32 moves to a position in which the socket assembly 8 does not need to rotate by such a large amount in order for the protrusion 14 of the catch element 10 to align with the indent 32. Indeed, as can be seen in Figure 10, when the catch element 10 is engaged with the indent 32, the socket assembly 8 is no longer aligned with the ideal easy-entry axis 33.

Turning to figure 11, the situation is shown in which the cam pin 30 has travelled all the way along the second section 28 of the cam slot 26, to arrive at the second end 34 of the cam slot 26. During this final part of the motion the cam plate 25 will rotate still further with respect to the side plates 1, so that the angle through which the socket assembly 8 must rotate in order for the catch element 10 to align with the detent 32 is again reduced.

It will be appreciated that, from the position shown in figure 11, when the side plates 1 are slid with respect to the main support element 24 to increase the effect of length of the steering column once again, the reverse process will occur, and the cam plate 25 will rotate back to the original position shown in Figure 8 as the cam pin 30 travels along the length of the cam slot 26.

It will be understood that, as the effective length of the steering column is shortened, the angle through which the socket assembly 8 must turn in order to be locked in the easy-entry position reduces. This is because, in general, with the steering column at its shortest effective length, the steering wheel is closest to the dashboard, and most likely to contact the dashboard, or another item within the vehicle cabin, thus preventing the socket assembly 8 from completing its full range of motion.

It will be understood that embodiments of the present invention provide simply and effective systems for allowing a vehicle's easy-entry and capability to function under an increased range of circumstances.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A vehicle steering column adjustment arrangement comprising:
a housing;
an adjustment element (7) to which a steering wheel column (8) may be connected so that the steering wheel column (8) pivots with the adjustment element (7); and
a retaining member (10), attached to the adjustment element (7); and
a moveable support element (4, 25) included in a shoulder (3) and attached to a side plate 1 which may move with respect to said plate (1) to a first position, in which the moveable support element (4, 25) presents a first support surface (6, 32), wherein
the adjustment element (7) may be placed in a first easy-entry position, in which the steering wheel column (8) is rotated away from the normal driving position, in which the retaining member (10) engages the first support surface (6, 32), to hold the adjustment element (7) in the first easy-entry position; and
the adjustment element (7) may be placed in a second easy-entry position, in which the steering wheel column (8) is rotated away from the normal driving position, in which the retaining member (10) engages the first support surface (6, 32) in a different position, and a further support surface (5), to hold the adjustment element (7) in the second easy-entry position.

2. A steering column adjustment arrangement according to claim 1, wherein the steering wheel column (8) is rotated away from the normal driving position by a lesser amount in the second easy-entry position than in the first easy-entry position.

3. A steering column adjustment arrangement according to any preceding claim wherein, when the movable support element (4) is in the first position, the movable support element (4) obstructs the further support surface (5).

4. A steering column adjustment arrangement according to any preceding claim, wherein the moveable support element (4) may move to a second position to allow the retaining member (10) to engage the further support surface (5).

5. A steering column adjustment arrangement according to any preceding claim, wherein the moveable support element (4) is moveable in a direction which is substantially perpendicular to the further support surface (5).

6. A steering column adjustment arrangement according to any preceding claim, wherein the first support surface (4) and further support surface (5) are generally parallel to, and spaced apart from, one another.

7. A steering column adjustment arrangement according to any preceding claim wherein the moveable support element (25) may move with respect to the housing between the first position, in which the first support surface (32) is in position to hold the adjustment element (7) in the first easy entry position, and a second position, in which the first support surface (32) is in position to hold the adjustment element (7) in the second easy-entry position.

8. A steering column arrangement according to claim 7, wherein the moveable support element (25) is rotatable with respect to the housing.

9. A steering column adjustment arrangement according to claim 8 wherein the rotation of the moveable support element (25) with respect to the housing is altered by varying the effective length of the steering column.

10. A steering column adjustment arrangement according to claim 8 or 9 wherein a cam slot (26) and cam follower (30) are provided to control the rotation of the moveable support element (25) with respect to the housing.

11. A vehicle incorporating a steering column adjustment arrangement according to any preceding claim.

## Patentansprüche

1. Fahrzeuglenksäulen-Einstellanordnung, umfassend:
ein Gehäuse;
ein Einstellelement (7), mit welchem eine Lenkradsäule (8) verbunden werden kann, so dass die Lenkradsäule (8) mit dem Einstellelement (7) schwenkt; und
ein Rückhalteelement (10), das an dem Einstellelement (7) angebracht ist; und
ein bewegliches Halteelement (4, 25), das in einer Schulter (3) enthalten ist und an einer Seitenplatte (1) angebracht ist, welches sich bezüglich der Platte (1) in eine erste Position bewegen kann, in welcher das bewegliche Halteelement (4, 25) eine erste Haltefläche (6, 32) darstellt, wobei
das Einstellelement (7) in einer ersten Einstiegshilfen-Position platziert werden kann, in welcher die Lenkradsäule (8) weg von der normalen Fahrposition gedreht ist, in welcher das Rückhalteelement (10) in die erste Haltefläche (6, 32) eingreift, um das Einstellelement (7) in der ersten Einstiegshilfen-Position zu halten; und
das Einstellelement (7) in eine zweite Einstiegshilfen-Position platziert werden kann, in welcher die Lenkradsäule (8) weg von der normalen Fahrposition gedreht ist, in welcher das Rückhalteelement (10) in die erste Haltefläche (6, 32) in einer unterschiedlichen Position und eine weitere Haltefläche (5) eingreift, um das Einstellelement (7) in der zweiten Einstiegshilfen-Position zu halten.

2. Lenksäulen-Einstellanordnung nach Anspruch 1, wobei die Lenkradsäule (8) weg von der normalen Fahrposition in der zweiten Einstiegshilfen-Position um einen geringeren Betrag als in der ersten Einstiegshilfen-Position weggedreht ist.

3. Lenksäulen-Einstellanordnung nach einem vorhergehenden Anspruch, wobei dann, wenn das bewegliche Halteelement (4) in der ersten Position ist, das bewegliche Halteelement (4) die weitere Haltefläche (5) hemmt.

4. Lenksäulen-Einstellanordnung nach einem vorhergehenden Anspruch, wobei das bewegliche Halteelement (4) sich in eine zweite Position bewegen kann, um zuzulassen, dass das Rückhalteelement (10) in die weitere Haltefläche (5) eingreift.

5. Lenksäulen-Einstellanordnung nach einem vorhergehenden Anspruch, wobei das bewegliche Halteelement (4) in eine Richtung beweglich ist, welche im Wesentlichen senkrecht zu der weiteren Haltefläche (5) ist.

6. Lenksäulen-Einstellanordnung nach einem vorhergehenden Anspruch, wobei die erste Haltefläche (4) und die weitere Haltefläche (5) im Wesentlichen parallel zueinander und voneinander beabstandet sind.

7. Lenksäulen-Einstellanordnung nach einem vorhergehenden Anspruch, wobei das bewegliche Halteelement (25) sich bezüglich des Gehäuses zwischen der ersten Position, in welcher die erste Haltefläche (32) in einer Position ist, um das Einstellelement (7) in der ersten Einstiegshilfen-Position zu halten, und einer zweiten Position bewegen kann, in welcher die erste Haltefläche (32) in einer Position ist, um das Einstellelement (7) in der zweiten Einstiegshilfen-Position zu halten.

8. Lenksäulen-Einstellanordnung nach Anspruch 7, wobei das bewegliche Halteelement (25) bezüglich des Gehäuses drehbar ist.

9. Lenksäulen-Einstellanordnung nach Anspruch 8, wobei die Drehung des beweglichen Halteelements (25) bezüglich des Gehäuses durch ein Variieren der effektiven Länge der Lenksäule geändert wird.

10. Lenksäulen-Einstellanordnung nach Anspruch 8 oder 9, wobei ein Nockenschlitz (26) und ein Nockenstößel (30) bereitgestellt sind, um die Drehung des beweglichen Halteelements (25) bezüglich des Gehäuses zu steuern.

11. Fahrzeug, umfassend eine Lenksäulen-Einstellanordnung nach einem vorhergehenden Anspruch.

## Revendications

1. Agencement de réglage de colonne de direction de véhicule comprenant :
un logement ;
un élément de réglage (7) auquel une colonne de direction (8) peut être raccordée de manière que la colonne de direction (8) pivote avec l'élément de réglage (7) ; et
un organe de retenue (10), rattaché à l'élément de réglage (7) ; et
un élément de support mobile (4, 25) compris dans un épaulement (3) et rattaché à un flasque (1), susceptible de passer, par rapport audit flasque (1), dans une première position dans laquelle l'élément de support mobile (4, 25) présente une première surface de support (6, 32) ; dans lequel
l'élément de réglage (7) peut être mis dans une première position facilitant l'entrée, dans laquelle la colonne de direction (8) est repoussée de la position normale de conduite et dans laquelle l'organe de retenue (10) s'emboîte dans la première surface de support (6, 32) afin de maintenir l'élément de réglage (7) dans la première position facilitant l'entrée ; et
l'élément de réglage (7) peut être mis dans une deuxième position facilitant l'entrée, dans laquelle la colonne de direction (8) est repoussée de la position normale de conduite et dans laquelle l'organe de retenue (10) s'emboîte dans la première surface de support (6, 32) dans une position différente, et dans une surface de support supplémentaire (5) afin de maintenir l'élément de réglage (7) dans la deuxième position facilitant l'entrée.

2. Agencement de réglage de colonne de direction selon la revendication 1, dans lequel la colonne de direction (8) subit une rotation moindre par rapport à la position normale de conduite pour passer dans la deuxième position facilitant l'entrée que dans la première position facilitant l'entrée.

3. Agencement de réglage de colonne de direction selon l'une quelconque des revendications précédentes dans lequel, lorsque l'élément de support mobile (4) se trouve dans la première position, l'élément de support mobile (4) obstrue la surface de support supplémentaire (5).

4. Agencement de réglage de colonne de direction selon l'une quelconque des revendications précédentes, dans lequel l'élément de support mobile (4) peut passer à une deuxième position permettant à l'organe de retenue (10) de s'emboîter dans la surface de support supplémentaire (5).

5. Agencement de réglage de colonne de direction selon l'une quelconque des revendications précédentes, dans lequel l'élément de support mobile (4) est mobile dans un sens essentiellement perpendiculaire à la surface de support supplémentaire (5).

6. Agencement de réglage de colonne de direction selon l'une quelconque des revendications précédentes, dans lequel la première surface de support (6) et la surface de support supplémentaire (5) sont globalement parallèles et espacées l'une de l'autre.

7. Agencement de réglage de colonne de direction selon l'une quelconque des revendications précédentes, dans lequel l'élément de support mobile (25) est susceptible de passer, par rapport au logement, entre la première position dans laquelle la première surface de support (32) est dans une position permettant de maintenir l'élément de réglage (7) dans la première position facilitant l'entrée, et une deuxième position dans laquelle la première surface de support (32) est dans une position permettant de retenir l'élément de réglage (7) dans la deuxième position facilitant l'entrée.

8. Agencement de réglage de colonne de direction selon la revendication 7, dans lequel l'élément de support mobile (25) est susceptible d'effectuer une rotation par rapport au logement.

9. Agencement de réglage de colonne de direction selon la revendication 8, dans lequel la rotation de l'élément de support mobile (25) par rapport au logement varie en fonction de la longueur effective de la colonne de direction.

10. Agencement de réglage de colonne de direction selon la revendication 8 ou 9, dans lequel une rainure de came (26) et un galet suiveur (30) sont prévus pour réguler la rotation de l'élément de support mobile (25) par rapport au logement.

11. Véhicule pourvu d'un agencement de réglage de colonne de direction selon l'une quelconque des revendications précédentes.
